# FASCICULE DE BREVET EUROPEEN

(11) **EP 2 523 852 B1**
(45) Date de publication et mention de la délivrance du brevet: **30.12.2015**
(21) Numéro de dépôt: 11704253.1
(22) Date de dépôt: 05.01.2011
(51) Int. Cl.: B64C 23/00

(54) **AÉRONEF COMPORTANT AU MOINS UN FILET DESTINÉ À RÉDUIRE LE BRUIT AÉRODYNAMIQUE D'UN ÉLÉMENT STRUCTUREL DUDIT AÉRONEF**
FLUGZEUG MIT MINDESTENS EINEM NETZ ZUR REDUZIERUNG AERODYNAMISCHER GERÄUSCHE AUS EINEM STRUKTURELEMENT DES BESAGTEN FLUGZEUGS
AIRCRAFT COMPRISING AT LEAST ONE NET FOR REDUCING AERODYNAMIC NOISE FROM A STRUCTURAL ELEMENT OF SAID AIRCRAFT

(30) Priorité: 12.01.2010 FR 1000110
(43) Date de publication de la demande: 21.11.2012
(73) Titulaire: Airbus Operations (S.A.S.), 31060 Toulouse (FR)
(72) Inventeur: PIET, Jean-François, F-31820 Pibrac (FR); PERRIN DECROUX, Stéphane, F-31370 Poucharramet (FR); MOLIN, Nicolas, F-31560 Nailloux (FR); CARUELLE, Bastien, F-31200 Toulouse (FR)
(74) Mandataire: Gevers France
(86) Numéro de dépôt international: PCT/FR2011/050014
(87) Numéro de publication internationale: WO 2011/086304

(56) Documents cités:
- WO-A1-2008/135647
- WO-A2-2007/113335
- US-A1- 2003 226 936

## Description

La présente invention concerne un aéronef comportant au moins un filet destiné à réduire le bruit aérodynamique d'un élément structurel dudit aéronef, engendré au cours d'un déplacement de ce dernier.

On connaît déjà des exemples de l'art antérieur où on a réduit le bruit aérodynamique avec un balai (voir US2003/0226936) ou des filets (voir WO 2008/135647 ou WO 2007/113335).

On sait qu'il existe de nombreuses sources de bruit sur un aéronef, par exemple un avion de transport, qui sont engendrées par un écoulement d'air autour d'éléments structurels de l'aéronef, fixes (par exemple les mâts de suspension, les ailes, etc.) ou mobiles (par exemple les becs de bord d'attaque, les volets de bord de fuite, les aérofreins, etc.). En effet, l'interaction d'un tel écoulement d'air avec un élément structurel forme une zone de turbulences au voisinage de la partie aval dudit élément, qui engendre, seule ou par interaction avec un autre élément structurel auxiliaire de l'aéronef disposé dans ladite zone de turbulences, un bruit aérodynamique indésirable.

Pour diminuer l'intensité du bruit engendré, il est connu de disposer un filet à mailles géométriques au voisinage de la partie aval dudit élément structurel, dans la zone de turbulences. Ainsi, les turbulences qui traversent le filet sont brisées, de sorte qu'elles perdent l'essentiel de leur énergie, entraînant une réduction de l'intensité du bruit aérodynamique.

Cependant, la présence d'un tel filet de réduction de bruit sur un élément structurel peut fortement dégrader les performances de l'aéronef lors de certaines phases de vol, notamment celles pour lesquelles une réduction de bruit n'est pas indispensable (par exemple un vol de croisière).

La présente invention a pour objet de remédier à cet inconvénient et, notamment, d'éviter que le ou les filets de réduction de bruit d'un aéronef ne dégradent sensiblement les performances de celui-ci cours d'un vol.

A cette fin, selon l'invention, l'aéronef comportant :
- au moins un élément structurel aérodynamique disposé dans un écoulement d'air, ledit écoulement d'air autour dudit élément engendrant, à au moins une de ses extrémités, une zone de turbulences à l'origine de bruit ; et
- au moins un filet souple agencé à une telle extrémité dudit élément, destiné à réduire au moins partiellement ledit bruit engendré,
   est remarquable en ce que ledit filet souple est escamotable et est apte à occuper au moins une position comprise entre les deux positions extrêmes suivantes :
- une position déployée dans laquelle ledit filet souple est disposé dans ladite zone de turbulences ; et
- une position escamotée dans laquelle ledit filet souple est, au moins partiellement, en dehors de ladite zone de turbulences.

Ainsi, grâce à l'invention, le filet souple peut être déployé dans la zone de turbulences, à l'origine de bruit aérodynamique indésirable, pour le réduire, au cours de phases de vol données (approche, décollage, etc.). Il peut en outre être escamoté lors de certaines phases de vol de l'aéronef (montée, croisière, etc.), lorsqu'il n'a plus d'utilité, afin d'éviter une dégradation des performances de l'aéronef.

En outre, lorsqu'il occupe ladite position escamotée, ledit filet est plié sur lui-même.

De façon avantageuse, la position dudit filet est adaptable automatiquement en fonction d'au moins un paramètre dudit aéronef (par exemple la vitesse, l'altitude, l'incidence, etc.).

En particulier, ledit filet peut être adaptatif, c'est-à-dire que l'adaptation de position de celui-ci est effectuée automatiquement sous la seule action dudit écoulement d'air (et donc de la vitesse dudit aéronef).

Par ailleurs, l'aéronef peut comporter des moyens de déploiement dudit filet (qui peuvent par exemple être formés par l'élément structurel lui-même lorsqu'il est mobile), destinés à déployer et à escamoter celui-ci. Ces moyens de déploiement peuvent par exemple être commandés manuellement par les pilotes ou, au contraire, de façon automatique.

De préférence, dans la position escamotée, ledit filet peut être soit logé, au moins partiellement, dans ledit élément, soit encore plaqué contre au moins une paroi de celui-ci.

Les figures du dessin annexé feront bien comprendre comment l'invention peut être réalisée. Sur ces figures, des références identiques désignent des éléments semblables.
La figure 1 montre, dans une vue schématique partielle du dessus, une aile d'avion comportant un filet de réduction de bruit escamotable, selon un premier exemple de réalisation conforme à l'invention. Dans cet exemple, le filet est destiné à briser les turbulences formées par un écoulement d'air autour d'un bec de bord d'attaque de l'aile.
La figure 2 est une coupe transversale de l'aile de la figure 1, selon la ligne II-II.
La figure 3 est une vue schématique de profil d'un mât de suspension d'un turbopropulseur à hélice propulsive équipé d'un filet de réduction de bruit escamotable, selon un deuxième exemple de réalisation.
La figure 4 est une coupe transversale schématique du mât de la figure 3, selon la ligne IV-IV.
Les figures 5 à 8 sont des variantes de réalisation de l'exemple illustré en figure 4.
La figure 9 est une section transversale d'une aile d'avion comportant un filet de réduction de bruit escamotable, selon un troisième exemple de réalisation, qui est destiné à affaiblir les turbulences formées par un écoulement d'air autour d'un aérofrein monté sur l'aile.
La figure 10, semblable à la figure 9, montre un filet de réduction escamotable, selon un quatrième exemple de réalisation conforme à l'invention, pour réduire les turbulences formées aux extrémités longitudinales d'un aérofrein d'aile d'avion.

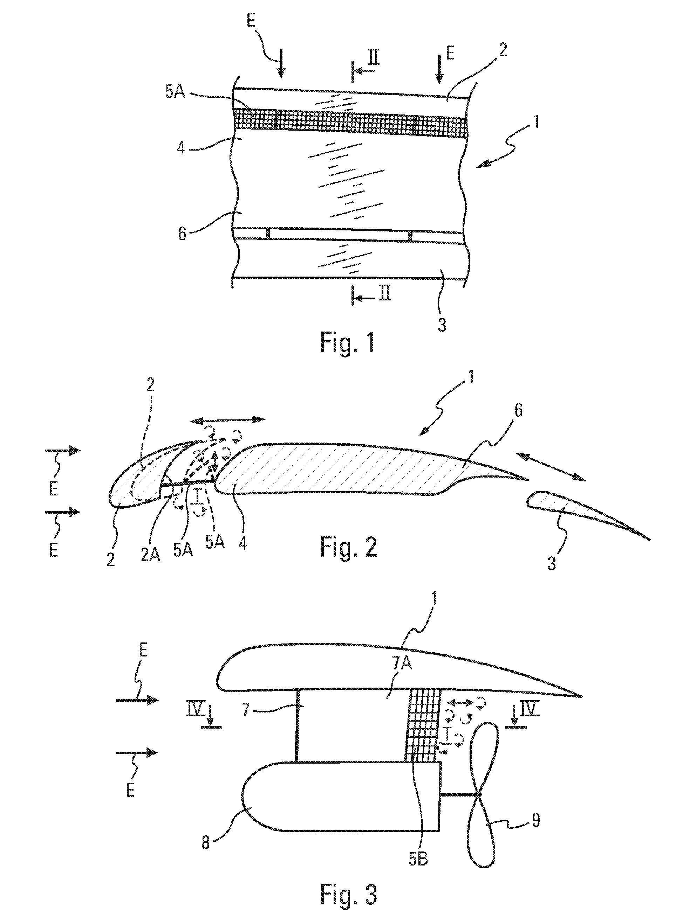

Sur les figures 1 et 2, on a illustré, conformément au premier exemple de réalisation de l'invention, une aile d'avion 1 pourvue d'un bec de bord d'attaque 2 et d'un volet de bord de fuite 3, tous les deux mobiles.

Comme le montre la figure 2, le bec 2 est représenté en trait continu, lorsqu'il est intégralement déployé, et en trait discontinu, lorsqu'il occupe une position partiellement déployée.

En position intégralement déployée, un écoulement d'air (symbolisé par la flèche E) autour du bec 2 engendre une zone de turbulences T au voisinage de la partie aval de celui-ci. La partie amont 4 de l'aile 1, située dans un prolongement aval du bec 2 déployé, est alors immergée, au moins partiellement, dans la zone de turbulences T. L'interaction des turbulences avec la partie amont 4 de l'aile 1 provoque du bruit aérodynamique, qui est notamment indésirable en phase d'approche ou de décollage.

Selon l'invention, pour réduire au moins en partie ce bruit aérodynamique indésirable, un filet de réduction de bruit 5A est disposé entre le bec 2 et la partie amont 4 de l'aile 1, ce qui a pour effet de briser les turbulences formées et de diminuer ainsi l'intensité du bruit. Le filet 5A, qui s'étend longitudinalement entre le bec 2 et l'aile 1, est fixé, d'une part, à l'intrados 2A dudit bec 2 et, d'autre part, à la partie amont 4 en regard.

Le filet 5A, par exemple formé de mailles géométriques, est souple et pliable. Il est apte à occuper au moins une position intermédiaire entre les deux positions extrêmes suivantes :
- une position déployée dans laquelle il est disposé dans ladite zone de turbulences T (le filet 5A est représenté en trait continu dans cette position sur la figure 2). Une telle position déployée correspond à un déploiement intégral du bec 2 ; et
- une position escamotée dans laquelle ledit filet 5A est en dehors dudit écoulement d'air E. Cette position escamotée coïncide avec une position entièrement repliée du bec 2 sur l'aile 1. Dans cette position escamotée, le filet 5A est replié sur lui-même, au moins une fois, vers l'intrados 2A du bec 2. Il est en outre plaqué contre celui-ci.

Sur la figure 2, on a également représenté, en trait discontinu, le filet 5A dans une position intermédiaire, entre les deux positions extrêmes précitées, associée à déploiement partiel du bec 2.

Du fait que le filet 5A est solidaire du bec 2, le déploiement de ce dernier (commandé manuellement par les pilotes ou de façon automatique) provoque le déploiement du filet 5A. Il en est de même pour le repliement du filet 5A. Autrement dit, le bec de bord d'attaque 2 joue le rôle de moyens de déploiement du filet 5A.

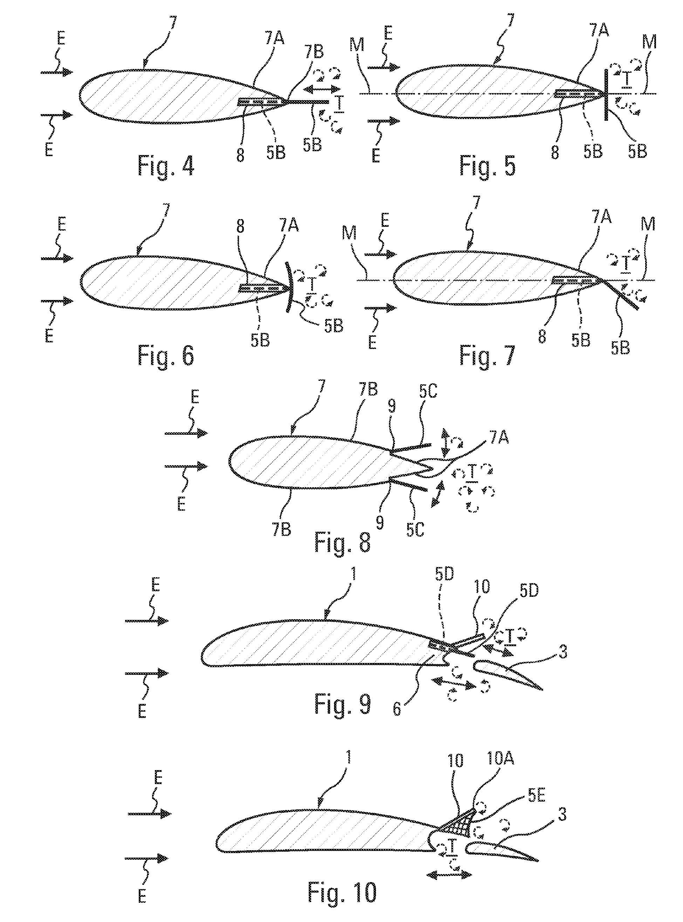

Dans le deuxième exemple de réalisation illustré sur les figures 3 et 4, on considère un mât de suspension 7 d'un turbopropulseur 8 à hélice propulsive 9 monté sous une aile 1 d'avion. Un écoulement d'air E autour du mât 7 provoque la formation d'une zone de turbulences T au voisinage de l'extrémité aval 7A dudit mât 7 qui, lorsqu'elle interagit avec l'hélice 9 disposée en aval de ce dernier, engendre du bruit indésirable.

Aussi, afin de réduire le bruit engendré, un filet rétractable 5B est agencé au niveau de l'extrémité aval 7A du mât de suspension 7. Il s'étend le long de ce dernier, par exemple sur au moins une partie de sa hauteur.

En outre, le filet 5B est apte à occuper au moins une position entre les deux positions extrêmes suivantes :
- une position déployée dans laquelle il est disposé dans ladite zone de turbulences T (le filet 5B est représenté en trait continu dans cette dernière position sur la figure 4). Dans ce cas, le filet 5B, sensiblement plane, est agencé à l'arrière du mât 7, dans le prolongement du bord de fuite 7B de ce dernier, pour réduire le saut de pression en aval du mât 7. En variante, le filet 5B pourrait être déployé orthogonalement au plan vertical médian M passant par le mât 7 (figure 5) et présenter éventuellement une forme optimisée (figure 6), par exemple de section transversale arrondie concave par rapport à l'écoulement d'air E, pour améliorer davantage la réduction du bruit aérodynamique. Dans une autre variante illustrée en figure 7, le filet plane 5B pourrait être, en position déployée, incliné par rapport au plan vertical médian M du mât 7 ;
- une position escamotée dans laquelle le filet 5B est rentré dans un logement 8 prévu à cet effet dans la partie aval 7A du mât 7 (le filet 5B est représenté dans la position escamotée en trait discontinu). Le filet 5B se trouve ainsi en dehors de l'écoulement d'air E et de la zone de turbulences T.

Les opérations de déploiement et d'escamotage du filet 5B dans le logement 8 sont effectuées par des moyens de déploiement (non représentés sur les figures), qui peuvent être commandés automatiquement en fonction d'un paramètre de l'avion (par exemple la vitesse, l'altitude, la phase de vol, etc.) ou, au contraire, manuellement par une action volontaire des pilotes.

Dans une autre variante du deuxième exemple représentée sur la figure 8, deux filets adaptatifs 5C, s'étendant le long du mât 7, sont disposés respectivement sur l'extrémité aval des parois latérales externes 7B du mât 7. Chaque filet 5C est fixé à la paroi latérale 7B correspondante, via son extrémité amont 9.

Les filets adaptatif 5C sont maintenus dans une position déployée (pour laquelle ils sont disposés dans la zone de turbulences T) par l'intermédiaire de moyens de déploiement, par exemple de type élastique, de sorte que, en l'absence d'écoulement d'air E (la vitesse de l'avion est alors nulle), ils occupent spontanément la position déployée.

En outre, en fonction de la vitesse de l'avion et sous l'action de l'écoulement d'air E, les filets 5C sont aptes à occuper une pluralité de positions intermédiaires entre la position déployée et une position escamotée (dans laquelle chaque filet 5C est plaqué contre la paroi latérale 7B correspondante du mât 7). Ainsi, plus la vitesse de l'avion est élevée, plus l'écoulement d'air E sur les filets 5C se révèle important et moins ceux-ci sont déployés.

De cette façon, on réalise un réglage automatique de la position des filets 5C en fonction de la vitesse de l'avion (un seuil de vitesse peut être mis en oeuvre), pour éviter une dégradation des performances de celui-ci au cours du vol (notamment lors d'une phase de croisière) tout en réduisant le bruit aérodynamique lorsque cela s'avère utile (par exemple lors d'une phase de décollage ou d'approche).

Par ailleurs, sur la figure 9, on a illustré, conformément au troisième exemple de réalisation, une section transversale d'aile 1 d'avion pourvue d'un volet de bord de fuite 3 et d'un aérofrein 10 (représenté en position déployée).

Pour réduire les turbulences T formées par un écoulement aérodynamique E autour de l'aérofrein 10 déployé, on installe un filet escamotable 5D, s'étendant longitudinalement le long de ladite aile 1, à l'extrémité aval 6 de celle-ci. Le déploiement du filet 5D d'une position escamotée (le filet 5D est représenté en trait discontinu), dans laquelle il rentré dans un logement 8 ménagé dans la partie aval 6 de ladite aile 1, et une position déployée (le filet 5D est représenté en trait continu), dans laquelle il est disposé dans la zone de turbulences T, peut être lié au déploiement du volet 3 ou de l'aérofrein 10. Un tel déploiement du filet 5D peut être obtenu par l'intermédiaire de moyens de déploiement (non représentés).

Selon le quatrième exemple de réalisation, conforme à l'invention, on peut disposer un filet pliable 5E à chacune des deux extrémités longitudinales de l'aérofrein 10A. Lorsque l'aérofrein 10 est déployé, les filets 5E occupent une position déployée (figure 10) et, lorsque l'aérofrein 10 est escamoté, les filets 5E sont pliés sur eux-mêmes dans une position escamotée (non représentée). L'aérofrein 10 fait ainsi office de moyens de déploiement des filets 5E.

De cette façon, on peut réduire le bruit engendré aux extrémités longitudinales de l'aérofrein 10 (encore désigné « bruit de coin »).

## Revendications

1. Aéronef comportant :
- au moins un élément structurel aérodynamique (2, 7, 10) disposé dans un écoulement d'air (E), ledit écoulement d'air autour dudit élément engendrant, à au moins une de ses extrémités, une zone de turbulences (T) à l'origine de bruit ; et
- au moins un moyen agencé à une telle extrémité dudit élément (2, 7, 10), destiné à réduire au moins partiellement ledit bruit engendré, ledit moyen étant escamotable et apte à occuper au moins une position comprise entre les deux positions extrêmes suivantes :
• une position déployée dans laquelle il est disposé dans ladite zone de turbulences (T) ; et
• une position escamotée dans laquelle il est, au moins partiellement, en dehors de ladite zone de turbulences (T),
**caractérisé en ce que** ledit moyen est un filet (5A, 5E) souple et **en ce**
**que** ledit filet (5A, 5E) est apte à être plié sur lui-même, lorsqu'il occupe ladite position escamotée.

2. Aéronef selon la revendication 1,
**caractérisé en ce que** la position dudit filet est adaptable automatiquement en fonction d'au moins un paramètre dudit aéronef.

3. Aéronef selon la revendication 2,
**caractérisé en ce que** l'adaptation de position dudit filet est effectuée automatiquement sous la seule action dudit écoulement d'air (E).

4. Aéronef selon l'une des revendications 1 à 3,
**caractérisé en ce qu'**il comporte des moyens de déploiement (2, 10) dudit filet (5A, 5E).

5. Aéronef selon l'une des revendications 1 à 4,
**caractérisé en ce que**, en position escamotée, ledit filet est logé, au moins partiellement, dans ledit élément structurel (7).

6. Aéronef selon l'une des revendications 1 à 4,
**caractérisé en ce que**, en position escamotée, ledit filet est plaqué contre au moins une paroi dudit élément structurel.

## Patentansprüche

1. Flugzeug, aufweisend:
- mindestens ein aerodynamisches Strukturelement (2, 7, 10), das in einer Luftströmung (E) angeordnet ist, wobei die Luftströmung um das Element an mindestens einem seiner Enden eine Turbulenzzone (T) als Geräuschquelle erzeugt, und
- mindestens ein Mittel, das an einem derartigen Ende des Elements (2, 7, 10) ausgebildet ist, das bestimmt ist, das erzeugte Geräusch mindestens zum Teil zu reduzieren, wobei das Mittel einziehbar ist und imstande, mindestens eine Position zwischen den zwei folgenden extremen Positionen einzunehmen:
- eine entfaltete Position, in welcher es in der Turbulenzzone (T) angeordnet ist, und
- eine eingezogene Position, in welcher es mindestens zum Teil außerhalb der Turbulenzzone (T) ist,
**dadurch gekennzeichnet, dass** das Mittel ein elastisches Netz (5A, 5E) ist und dass das Netz (5A, 5E) imstande ist, auf sich selbst gefaltet zu sein, wenn es die eingezogene Position einnimmt.

2. Flugzeug nach Anspruch 1,
**dadurch gekennzeichnet, dass** die Position des Netzes automatisch in Abhängigkeit von mindestens einem Parameter des Flugzeugs anpassbar ist.

3. Flugzeug nach Anspruch 2,
**dadurch gekennzeichnet, dass** die Positionsanpassung des Netzes automatisch allein durch die Wirkung der Luftströmung (E) erfolgt.

4. Flugzeug nach einem der Ansprüche 1 bis 3,
**dadurch gekennzeichnet, dass** es Entfaltungsmittel (2, 10) des Netzes (5A, 5E) aufweist.

5. Flugzeug nach einem der Ansprüche 1 bis 4,
**dadurch gekennzeichnet, dass** das Netz in der eingezogenen Position mindestens zum Teil im Strukturelement (7) untergebracht ist.

6. Flugzeug nach einem der Ansprüche 1 bis 4,
**dadurch gekennzeichnet, dass** das Netz in der eingezogenen Position an mindestens einer Wand des Strukturelements anliegt.

## Claims

1. An aircraft comprising:
- at least one aerodynamic structural element (2, 7, 10) arranged in an air flow (E), said air flow around said element generating, at least on one of the ends thereof, a turbulence area (T) at the origin of the noise; and
- at least one means arranged on such end of said element (2, 7, 10), for reducing at least partially said generated noise, said means being retractable and being able to occupy at least one position comprised between the two following extreme positions:
• one extended position in which said flexible net (5A to 5E) is arranged within said turbulence area (T); and
• one retracted position in which said flexible net (5A to 5E) is at least partially outside said turbulence area (T),
**characterized in that** said means is a flexible net (5A, 5E) and that said net (5A, 5E) is able to be folded on itself when it occupies said retracted position.

2. The aircraft according to claim 1,
**characterized in that** the position of said net is automatically adaptable as a function of at least one parameter of said aircraft.

3. The aircraft according to claim 2,
**characterized in that** the position adaptation of said net is automatically performed under the only action of said air flow (E).

4. The aircraft according to any of claims 1 to 3,
**characterized in that** it comprises extension means (2, 10) of said net (5A, 5E).

5. The aircraft according to any of claims 1 to 4,
**characterized in that**, in a retracted position, said net is housed at least partially in said structural element (7).

6. The aircraft according to any of claims 1 to 4,
**characterized in that**, in a retracted position, said net is pressed against at least one wall of said structural element.
